Europäisches Patentamt

European Patent Office

Office européen des brevets

(11) Publication number: **0 251 546 B1**

(12) **EUROPEAN PATENT SPECIFICATION**

(45) Date of publication of patent specification: **11.03.92**  (51) Int. Cl.⁵: **B29C 51/16**

(21) Application number: **87305306.0**

(22) Date of filing: **16.06.87**

(54) Making automobile body panels having applied painted carrier films.

(30) Priority: **02.07.86 US 881344**

(43) Date of publication of application:
**07.01.88 Bulletin 88/01**

(45) Publication of the grant of the patent:
**11.03.92 Bulletin 92/11**

(84) Designated Contracting States:
**DE FR GB IT**

(56) References cited:
**DE-A- 1 946 820**
**FR-A- 1 135 933**
**GB-A- 2 103 468**
**US-A- 3 551 232**
**US-A- 4 496 628**

(73) Proprietor: **GENERAL MOTORS CORPORA-TION**
**General Motors Building 3044 West Grand Boulevard**
**Detroit Michigan 48202(US)**

(72) Inventor: **Cox, Howard W.**
**2766 Heathfield**
**Birmingham Michigan 48010(US)**
Inventor: **Mentzer, Charles C.**
**18843 Medford**
**Birmingham Michigan 48009(US)**
Inventor: **Short, William T.**
**18595 Framingham Street**
**Southfield Michigan 48076(US)**

(74) Representative: **Denton, Michael John et al**
**Patent Section Vauxhall Motors Limited 1st Floor Gideon House 26 Chapel Street**
**Luton Bedfordshire LU1 2SE(GB)**

Rank Xerox (UK) Business Services

## Description

This invention relates to a method of making automobile body panels.

Automobile body panels are traditionally made of sheet metal or plastics material painted with layers of pigmented paints. The painting procedure for these panels requires elaborate facilities, and consequently involves heavy expense. For instance, a large area of floor space must be maintained in a clean-room environment for the spraying of paint and clear coat, and for the baking and curing of such paint and clear coat on the body panels. Moreover, solvent-based paints have come to be considered undesirable in recent years because of environmental concerns. As a consequence, the evaporation of such solvents must be strictly controlled.

The present invention is concerned with a method of making automobile body panels which permits elimination of the entire painting procedure in an automobile assembly plant.

To this end a method in accordance with the present invention comprises the combination of features specified in claim l.

The method in accordance with the present invention thus involves the production of pre-painted carrier films which are then applied to automobile body panels. The method of applying the pre-painted carrier film to an automobile body panel can be automated for a production process.

By the use of the present invention, pre-painted carrier films can be applied to vehicle body panels such that all the body panels mounted on an automobile or other vehicle are colour-matched within an acceptable tolerance. This offers the possibility of improving the paint colour match on a vehicle.

In a preferred embodiment of a method in accordance with the present invention, a method of applying pre-painted carrier films to automobile body panels such that all the body panels have the same colour appearance can be carried out by the following operative steps. Firstly, a layer of a pigmented paint is applied to a plastics film having sufficient thickness and rigidity. A layer of clear coat may optionally be applied on top of the paint layer to further improve the appearance. The uncoated side of this plastics film is then coated with a layer of an adhesive that can be heat-activated. This pre-painted carrier film is then heated in an oven to a temperature at which the plastics film became sufficiently pliable for it to be vacuum-formed. The temperature must also be sufficiently high to activate the adhesive layer on the back of the pre-painted film. The resulting heated pre-painted film is then positioned over a substrate for a body panel in a vacuum-forming device. Air is withdrawn from under the pre-painted film such that the film thereby wraps around and adheres to the substrate without forming defects such as air bubbles.

In an alternative embodiment vacuum holes are drilled into a supporting buck for the substrate in such a way that a heated film edge-wraps the substrate so that the edges of the substrate are covered by pre-painted film. After the excess film has been trimmed away from the substrate along the edges of the part, a completed automobile body panel with a painted surface is thereby ready for assembly to an automobile.

Amongst the prior art, US-A-4 496 628 discloses a laminate for the protection of motor vehicle bodies, for example rocker panels and adjacent parts, from abrasion damage, and US-A-3 55l 232 discloses a method of vacuum-forming laminated articles, for example decorative layers which are to be adhesively bonded to a substrate to provide structures such as interior automobile panels and glove compartment doors.

In the drawings:

Figure l is a schematic view of a vacuum-forming arrangement wherein a pre-painted carrier film is stretched over a substrate to be covered;

Figure 2 is a schematic view similar to Figure l but showing the effect of applying vacuum from the bottom of a forming box to draw the pre-painted carrier film down on to the substrate;

Figure 3 is a schematic view similar to Figure l but showing the pre-painted carrier film completely covering the substrate under the effect of the vacuum;

Figure 4 is a schematic view similar to Figure l but showing the pre-painted carrier film drawn down evenly over the edges of the substrate;

Figure 5 is a schematic view showing an alternative embodiment in which a support buck, an inner box and an outer vacuum box are used;

Figure 6 is a schematic view similar to Figure 5 but showing the effect of applying vacuum under the support buck after the inner box has been raised;

Figure 7 is a schematic view similar to Figure 5 but showing a pre-painted carrier film stretched down to cover the substrate and the sides of the inner box; and

Figure 8 is a schematic view similar to Figure 5 but showing the support buck in a lowered position for edge-to-edge wrapping of the substrate.

With reference now initially to Figure l of the drawings, wherein a vacuum-former l0 is schematically shown, the vacuum-former l0 comprises a vacuum box l2, a stretcher frame l4, a vacuum port l6 and a support buck l8. A pre-painted carrier film 20 is first loaded into the stretcher frame l4 with the paint side up, and a substrate 22 which is to be covered by the pre-painted carrier film 20 is loaded on to the support buck 18. The support buck 18 is mounted on a vacuum plate 24 for the evacuation of air trapped under the pre-painted carrier film 20.

The substrate 22 may be constructed of any suitable material, such as a reaction precursor of urethane, a reaction precursor of polyamide (nylon), a glass fibre-reinforced sheet moulding compound, an injection-mouldable thermoplastic material or a metallic material.

Examples of carrier films which have proved suitable are an extruded polyurethane film supplied by Dow Chemical Company, and a thermoplastic polyester film supplied by Eastman Chemical Products. The thickness of the film is approximately 0.25 mm (0.0l0 inch). The rear surface of the film was coated with a commercial acrylic contact adhesive capable of being activated at a temperature of l38°C (280°F). The carrier films were coated by means of a spray painting technique with a red maple metallic paint supplied by PPG Industries under the trade mark Durethane l0l. The size of the film samples used was approximately 60 cm × 60 cm. The carrier films were hand-sprayed to an average coating thickness of between 0.025 and 0.l0 mm (0.00l and 0.004 inch). The cure conditions used for these pre-painted carrier films were a temperature of ll0°C and a time of 30 minutes.

As is shown in Figure l, the pre-painted carrier film 20 is clamped into the stretcher frame l4, which can be moved horizontally into an oven (not shown) for heating. An oven equipped with quartz heaters can for example be used for rapid heating of the film to a temperature of approximately l49°C (300°F). An optical thermometer is conveniently used to monitor the surface temperature of the film in the oven. Once the surface temperature reaches the desirable forming temperature, the stretcher frame l4 is rapidly moved out of the oven and positioned over the top of the vacuum box l2.

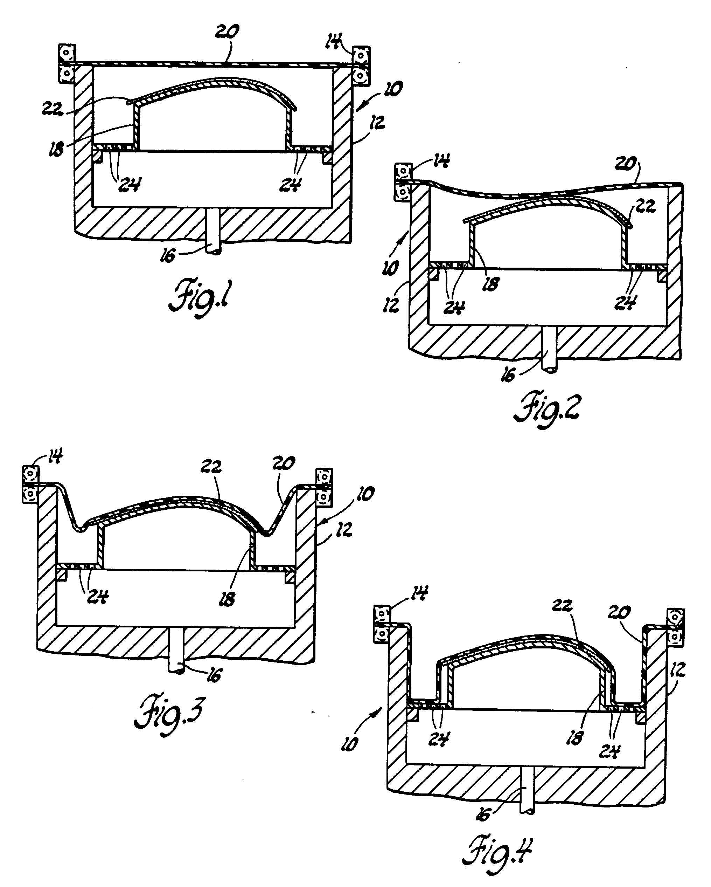

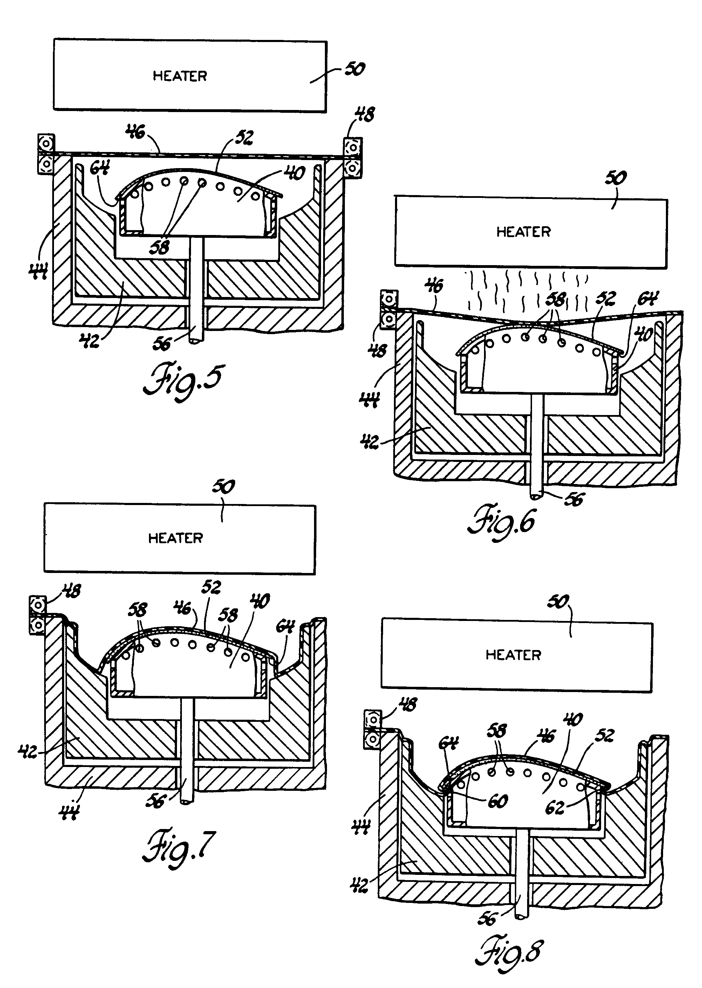

Figure 2 shows a heated pre-painted carrier film 20 sagging from its clamped position into the vacuum box l2. Vacuum is then applied immediately to the bottom of the vacuum box l2 by way of the vacuum port l6, to evacuate air trapped under the carrier film 20.

Figure 3 shows that as air is evacuated from the vacuum box l2, the pre-painted carrier film 20 is drawn down further on to the substrate 22 to cover the entire surface. The carrier film 20 sticks to the substrate on contact by the acrylic adhesive backing.

Figure 4 shows the final stage of the vacuum-forming process, wherein more air is evacuated from the vacuum box l2. The film 20 is thereby drawn down evenly over the edges of the support box l8. The substrate 22 with the pre-painted carrier film 20 adhered to it can then be removed from the vacuum box l2, for excess film to be trimmed off along the edges of the substrate.

In the alternative embodiment which is shown in Figures 5 to 8, a movable support buck and a movable inner vacuum box are used instead of the stationary support buck used in the previous embodiment. This is shown in Figure 5, according to which a movable support buck 40 and a movable inner box 42 are mounted inside an outer vacuum box 44. Both the support buck 40 and the inner box 42 are mounted on air cylinders which permit movement up and down as desired. Figure 5 also shows a pre-painted carrier film 46 mounted in a stretcher frame 48 which can be moved rapidly into and out of a heater 50. With reference to Figure 5, at the start of a forming cycle a substrate 52 for a body panel is placed on the support buck 40 with the support buck 40 in its 'up' position. The pre-painted carrier film 46 is prepared essentially as in the previous embodiment. The carrier film 46 is placed under the heater 50 until the surface temperature of the film reaches a temperature of l49°C (300°F) and the film starts sagging. The film is then rapidly moved out of the heater 50 and positioned over the vacuum box 44. The support buck 40 is rapidly raised, such that the carrier film 46 touches the highest point of the substrate 52. Air is withdrawn through the vacuum port 56 to evacuate air trapped under the carrier film 46. The air is evacuated around the edges of the substrate 52 by way of vacuum holes 58 drilled in the top edge of the support buck 40.

Figure 7 shows a condition in which the pre-painted carrier film 46 continues to be drawn down on to the substrate 52, and adheres to it on contact with no air entrapment. As the carrier film 46 reaches the edges of the substrate 52 and continues to be drawn down on to the sides of the support buck 40, a stretched film section is created between the edges of the substrate and the sides of the support buck 40.

As is shown in Figure 8, in the final step of the stretch-forming process the support buck 40, with the substrate 52 in position on it, is lowered through a distance of approximately 25mm (one inch), to cause the stretched carrier film 46 to droop at 60. As air is meanwhile being continuously withdrawn from the cavity between the support buck 40 and the inner box 42, the stretched carrier film 46 is drawn under the substrate 52 at 62, where it adheres on contact to the rear edges 64 of the substrate 52. This last step of the stretch-forming process, wherein the support buck 40 and the substrate 52 are both lowered, accomplishes an important task of edge-wrapping the carrier film to the rear surface of the substrate. This procedure, when carried out in an automated manner, represents a great saving in the manual labour otherwise required to edge-wrap each substrate. The substrate with the pre-painted carrier film adhered to it may then be removed for a trimming operation.

During the stretch-forming process, a deformation of between 30% to I50% has been noted in the stretched carrier film when the film sags after heating and is then drawn by the vacuum action on to the substrate. The contour of the substrate and its orientation largely determine the localised deformation of the carrier film.

The addition of a clear coat layer to the pre-painted carrier film before the vacuum-forming process has been found to produce a great improvement in the colour appearance of the vacuum-formed carrier film on a substrate. For this purpose it is possible to use a flexible clear coat supplied by PPG Industries under the designation URC-I000 at a thickness of 0.025 mm (0.00I inch).

To achieve proper curing of a coating containing a clear-coat top layer, it is necessary to add 5% by weight of an aromatic sulphonic acid catalyst solution such as that supplied by PPG under the designation PPG 900-I6I6. This allows the clear-coat layer to cure under the same conditions as the Durethane I0I topcoats. In some cases a clear coat may be applied to the top of a carrier film after vacuum-forming, for even better results.

In one test, in which a clear coat was applied on top of a pre-painted carrier film before vacuum-forming, the gloss level (at a temperature of -6.7°C/20°F) of the final product was increased from a value of I5 when no clear coat was used to a value of 65 when a clear coat was used. The level of haze (at a temperature of -I6.7°C/2°F) was drastically reduced from a value of 60 to a value of less than 5 in the same samples. The gloss readings were obtained on a Hunter 20° portable gloss meter. The haze values were obtained by the use of a Hunter Dori-gon model D47-6 abridged goniophotometer.

It will be evident from the foregoing that when an improvement in the gloss level of a finished product is desired, a thin layer of clear coat may be applied to the pre-painted carrier film either before or after the vacuum-forming process. In a volume production system such as is used in the automotive industry, it will generally be more desirable to apply a clear coat on top of a pre-painted carrier film before the stretch-forming process.

It is possible for large rolls of carrier film to be coated with a pigmented paint layer and a clear-coat layer and baked through a baking cycle to cure both the paint layer and the clear coat-layer. The resulting roll of coated film may then be stored for future use when such colour is required on a vehicle body panel.

The present invention completely avoids the need for the usual paint facilities in an automobile assembly plant, since the pre-painted carrier films may be vacuum-formed directly on to vehicle body panels in a simple and automated procedure.

In the preferred embodiment, this results from the described procedure involving pre-painting the external sheet layer 20 with a durable paint on the top layer, and, after the bottom surface has been coated with an adhesive layer, thermo-forming the external sheet layer under vacuum on to the rigid substrate layer 22.

## Claims

1. A method of making a plurality of automobile body panels each comprising an external sheet layer (20) and an underlying substrate (22), the sheet layer (20) having a top surface that is painted to a predetermined colour and a bottom surface that is bonded to the underlying substrate (22), such that the panels have the same colour appearance when mounted on a vehicle, the method comprising the steps of:

   a) applying a durable coat of paint of a predetermined colour to the top surface of the sheet layer (20) and baking for a sufficient length of time to adequately cure the paint;

   b) coating the bottom surface of the sheet layer (20) with a layer of an adhesive that is activated when heated;

   c) heating the sheet layer (20) to a temperature at which the sheet layer (20) becomes sufficiently pliable for vacuum-forming and the adhesive layer has become activated; and

   d) positioning the heated sheet layer (20) over the substrate (22) and withdrawing air, or other fluid medium, to establish a vacuum under the substrate (22) such that the sheet layer (20) vacuum-forms over and adheres to the substrate (22).

2. A method according to claim I, characterised in that in step a), subsequent to the application of the coat of paint to the top surface of the sheet layer (20), a layer of flexible clear coat is applied to the top surface of the painted sheet layer (20), and thereupon the baking of the sheet layer (20) is effected for a sufficient length of time to adequately cure the coat of paint and the layer of clear coat.

3. A method according to claim I or 2, characterised in that the substrate (22) has a front surface contoured to define a portion of the exterior surface of an automobile.

4. A method according to any one of claims I to

3, characterised in that the substrate (22) is formed from a reaction precursor of urethane, a reaction precursor of polyamide (nylon), a glass fibre-reinforced sheet moulding compound, an injection-mouldable thermoplastic material or a metallic material.

5. A method according to any one of claims I to 4, characterised in that the sheet layer (20) forms a facing sheet disposed over the entire front surface of the substrate (22) and contoured in detail in conformance with the contour of the front surface of the substrate (22).

6. A method according to any one of claims I to 5, characterised in that the sheet layer (20) and the applied coat of paint together form a laminate comprising a thermoplastic inner sheet having a thickness of at least 0.05 mm and at least one layer of a pigmented paint on the outer surface of the thermoplastic inner sheet.

7. A method according to any one of claims I to 6, characterised in that the layer of adhesive is evenly distributed between the substrate (22) and the sheet layer (20) and forms a permanent bond sufficiently strong to withstand automobile operating conditions and environments.

8. An automobile body which contains body panels each having substantially the same colour appearance, the automobile body comprising:
a substrate (22) having front and back surfaces, with the front surface of the substrate (22) being contoured to define a portion of the exterior surface of an automobile, and the substrate (22) being formed from a reaction precursor of urethane, a reaction precursor of polyamide (nylon), a glass fibre-reinforced sheet moulding compound, an injection-mouldable thermoplastic material or a metallic material;
a facing sheet layer (20) disposed over the entire front surface of the substrate (22) and contoured in detail in conformance with the contour of the front surface of the substrate (22), the facing sheet layer (20) being a laminate comprising a thermoplastic inner sheet having a thickness of at least 0.05 mm and at least one layer of a pigmented paint on the outer surface of the thermoplastic inner sheet; and
an adhesive layer evenly distributed between the substrate (22) and the facing sheet layer (20) and forming a permanent bond sufficiently strong to withstand automobile operating conditions and environments.

**Revendications**

1. Procédé de fabrication de plusieurs panneaux de carrosserie d'automobile comprenant chacun une couche externe (20) sous forme d'une feuille et un substrat sous-jacent (22), la couche (20) formée par la feuille ayant une surface supérieure qui est peinte à une couleur prédéterminée et une surface inférieure qui est collée au substrat sous-jacent (22), si bien que les panneaux ont le même aspect coloré lorsqu'ils sont montés sur un véhicule, le procédé comprenant les étapes suivantes :
(a) l'application d'un revêtement durable de peinture de couleur prédéterminée à la face supérieure de la couche (20) en forme de feuille et la cuisson pendant un temps suffisant pour que la peinture soit convenablement durcie,
(b) le revêtement de la face inférieure de la couche (20) en forme de feuille par une couche d'un adhésif qui est activé lorsqu'il est chauffé,
(c) le chauffage de la couche (20) en forme de feuille à une température à laquelle cette couche (20) devient suffisamment souple pour être formée sous vide et la couche adhésive a été activée, et
(d) le positionnement de la couche chauffée (20) en forme de feuille sur le substrat (22) et l'extraction d'air ou d'un autre fluide de manière qu'un vide soit établi sous le substrat (22), si bien que la couche (20) en forme de feuille est formée sous vide sur le substrat (22) et adhère à celui-ci.

2. Procédé selon la revendication 1, caractérisé en ce que, dans l'étape a), après l'application du revêtement d'une peinture à la face supérieure de la couche (20) en forme de feuille, une couche d'un revêtement transparent et souple est appliquée à la face supérieure de la couche peinte (20) en forme de feuille, et la cuisson de la couche (20) en forme de feuille est réalisée pendant un temps suffisant pour que la couche de peinture et la couche transparente de revêtement soient convenablement durcies.

3. Procédé selon la revendication 1 ou 2, caractérisé en ce que le substrat (22) a une surface avant dont le profil permet la formation d'une partie de la surface externe d'une automobile.

4. Procédé selon l'une quelconque des revendications 1 à 3, caractérisé en ce que le substrat (22) est formé d'un précurseur d'uréthane, d'un précurseur d'un polyamide (nylon), d'une composition de moulage de feuille armée de fibres de verre, d'une matière thermoplastique qui peut être moulée par injection, ou d'une matière métallique.

5. Procédé selon l'une quelconque des revendications 1 à 4, caractérisé en ce que la couche (20) en forme de feuille constitue une feuille de parement placée sur toute la surface avant du substrat (22) et ayant un contour correspondant en détail au profit de la surface avant du substrat (22).

6. Procédé selon l'une quelconque des revendications 1 à 5, caractérisé en ce que la couche (20) en forme de feuille et la couche de peinture qui lui est appliquée forment ensemble un stratifié comprenant une feuille interne thermoplastique ayant une épaisseur d'au moins 0,05 mm et au moins une couche de peinture pigmentée placée à la surface externe de la feuille interne thermoplastique.

7. Procédé selon l'une quelconque des revendications 1 à 6, caractérisé en ce que la couche d'un adhésif est régulièrement répartie entre le substrat (22) et la couche (20) en forme de feuille et constitue une liaison permanente suffisamment robuste pour résister aux conditions et environnement de fonctionnement d'une automobile.

8. Carrosserie d'automobile muni de panneaux de carrosserie ayant tous pratiquement le même aspect coloré, la carrosserie d'automobile comprenant :

une substrat (22) ayant des faces avant et arrière, la face avant du substrat (22) ayant un profil délimitant une partie de la surface externe d'une automobile, le substrat (22) étant formé d'un précurseur d'uréthanne, d'un précurseur d'un polyamide (nylon), d'une composition de moulage de feuille armée de fibres de verre, d'une matière thermoplastique moulable par injection ou d'une matière métallique,

une couche (20) formant une feuille de parement disposée sur toute la surface avant du substrat (22) et ayant un contour correspondant en détail à celui de la face avant du substrat (22), la couche (20) formant la feuille de parement étant un stratifié comprenant une feuille thermoplastique interne ayant une épaisseur au moins égale à 0,05 mm et au moins une couche d'une peinture pigmentée placée à la surface externe de la feuille thermoplastique interne, et

une couche adhésive, régulièrement répartie entre le substrat (22) et la couche (20) formant la feuille de parement, constituant une liaison permanente suffisamment robuste pour qu'elle résiste aux conditions et environnement de fonctionnement d'une automobile.

**Patentansprüche**

1. Verfahren zum Herstellen einer Vielzahl von Kraftfahrzeug-Karosserietafeln, die jeweils eine äußere Lagenschicht (20) und ein darunterliegendes Substrat (22) enthalten, wobei die Lagenschicht (20) eine Oberfläche besitzt, die in einer vorbestimmten Farbe lackiert ist, und eine Unterfläche, die mit dem darunterliegenden Substrat (22) verbunden ist, so daß die Tafeln, wenn sie an einem Fahrzeug angebracht sind, die gleiche Farberscheinung besitzen, wobei das Verfahren folgende Schritte umfaßt:

a) es wird ein dauerhafter Lacküberzug einer vorbestimmten Farbe auf die Oberfläche der Lagenschicht aufgebracht und während einer zum angemessenen Aushärten des Lacks ausreichenden Zeitdauer eingebrannt;
b) die Unterfläche der Lagenschicht (20) wird mit einer Schicht eines Klebers bedeckt, der beim Erhitzen aktiviert wird;
c) die Lagenschicht (20) wird auf eine Temperatur erhitzt, bei der die Lagenschicht (20) in zur Unterdruck-Verformung ausreichender Weise nachgiebig wird und die Kleberschicht aktiviert worden ist; und
d) die erhitzte Lagenschicht (20) wird über das Substrat (22) gelegt und Luft oder ein anderes fluides Medium abgesaugt, um Unterdruck unter dem Substrat (22) so herzustellen, daß die Lagenschicht (20) sich über dem Substrat (22) vakuumverformt und an ihm anklebt.

2. Verfahren nach Anspruch 1, dadurch gekennzeichnet, daß im Schritt a) nach dem Aufbringen der Lackschicht auf die obere Fläche der Lagenschicht (20) eine Schicht einer flexiblen klaren Beschichtung auf die Oberfläche der lackierten Lagenschicht (20) aufgebracht wird und daraufhin das Einbrennen der Lagenschicht (20) während einer Zeitdauer bewirkt wird, die ausreicht, um die Lackschicht und die Schicht der klaren Beschichtung angemessen auszuhärten.

3. Verfahren nach Anspruch 1 oder 2, dadurch gekennzeichnet, daR das Substrat eine zur Bestimmung eines Abschnitts der Außenfläche eines Kraftfahrzeugs gestaltete Vorderfläche besitzt.

4. Verfahren nach einem der Ansprüche 1 bis 3, dadurch gekennzeichnet, daß das Substrat (22) aus einem Reaktions-Zwischenprodukt von Urethan, einem Reaktions-Zwischenprodukt von Polyamid (Nylon), einer glasfaserverstärkten Schichtformungs-Masse, einem einspritzformbaren thermoplastischen Material oder aus einem Metallmaterial gebildet ist.

5. Verfahren nach einem der Ansprüche 1 bis 4, dadurch gekennzeichnet, daß die Lagenschicht (20) eine über die gesamte Frontfläche des Substrats (22) gesetzte Deckschicht bildet, die im einzelnen entsprechend der Frontfläche des Substrats (22) gestaltet ist.

6. Verfahren nach einem der Ansprüche 1 bis 5, dadurch gekennzeichnet, daß die Lagenschicht (20) und die aufgebrachte Lackschicht zusammen ein Laminat bilden, das eine thermoplastische Innenschicht mit einer Dicke von mindestens 0,05 mm und mindestens eine Schicht pigmentierten Lacks an der Außenfläche der thermoplastischen Innenschicht umfaßt.

7. Verfahren nach einem der Ansprüche 1 bis 6, dadurch gekennzeichnet, daß die Kleberschicht gleichmäßig zwischen dem Substrat (22) und der Lagenschicht (20) verteilt ist und eine permanente Bindung bildet, die ausreichend stark ist, um Kraftfahrzeug-Betriebsbedingungen und -Umgebungen zu widerstehen.

8. Kraftfahrzeug-Karosserie, die Karosserie-Tafeln enthält, welche jeweils im wesentlichen die gleiche Farberscheinung besitzen, wobei die Kraftfahrzeug-Karosserie umfaßt:
ein Substrat (22) mit vorderen und hinteren Flächen, wobei die vordere Fläche des Substrats (22) zum Bestimmen eines Abschnitts der Außenfläche eines Kraftfahrzeugs gestaltet ist und das Substrat (22) aus einem Reaktions-Zwischenprodukt von Urethan, einem Reaktions-Zwischenprodukt von Polyamid (Nylon), einer glasfaserverstärkten Schichtformungs-Masse, einem einspritz-formbaren thermoplastischen Material oder einem Metallmaterial gebildet ist;
eine über die gesamte Vorderfläche des Substrats (22) angeordnete und im einzelnen entsprechend der Gestalt der Vorderfläche des Substrats (22) gestaltete Decklagenschicht (20), wobei die Decklagenschicht (20) ein Laminat ist, das eine thermoplastische Innenschicht mit einer Dicke von mindestens 0,05 mm und mindestens eine Schicht pigmentierten Lacks an der Außenfläche der thermoplastischen Innenschicht umfaßt; und

eine gleichmäßig zwischen dem Substrat (22) und der Lagenschicht (20) verteilte Kleberschicht, die eine ausreichend starke permanente Bindung bildet, um Kraftfahrzeug-Betriebsbedingungen und -Umgebungen auszuhalten.

Fig.1

Fig.2

Fig.3

Fig.4

Fig.5

Fig.6

Fig.7

Fig.8